# EUROPEAN PATENT APPLICATION

(11) **EP 4 124 767 A1**
(43) Date of publication of application: **01.02.2023**
(21) Application number: 21187656.0
(22) Date of filing: 26.07.2021
(51) Int. Cl.: F16B 37/08, E04B 1/41

(54) **ROD CONNECTOR WITH HOLLOW PIN**

(71) Applicant: Hilti Aktiengesellschaft, 9494 Schaan (LI)
(72) Inventor: Ziltener, Michael, 8854 Siebnen (CH); Gutensohn, Markus, 6845 Hohenems (AT)
(74) Representative: Hilti Aktiengesellschaft Corporate Intellectual Property

(57) **Abstract**

Rod connector comprising a housing having a cavity for receiving a rod therein, wherein the cavity extends through the housing, from an open front end of the housing to a rear end of the housing, at least one rod engagement body, which is arranged within the cavity, wherein the housing has a tapered surface, which delimits the cavity, and which tapers towards the front end of the housing, for wedging the at least one rod engagement body against the rod, and a closure, which closes the cavity at the rear end of the housing, characterized in that the rod connector further comprises a pin, which projects from the closure into the cavity, wherein the pin is hollow so as to define a receptacle for receiving a smaller diameter rod, and wherein the pin comprises a collar which provides an abutment for a larger diameter rod.

## Description

The invention relates to a rod connector according to the preamble of claim 1. A device of this type comprises a housing having a cavity for receiving a rod therein, wherein the cavity extends through the housing, from an open front end of the housing to a rear end of the housing, at least one rod engagement body, which is arranged within the cavity, wherein the housing has a tapered surface, which delimits the cavity, and which tapers towards the front end of the housing, for wedging the at least one rod engagement body against the rod when the rod is arranged within the cavity, and a closure, which closes the cavity at the rear end of the housing.

EP 1130274 B1, EP 1201944 B1, US 2020325673 A1, US 2010108840 A1 (see also https://www.erico.com/catalog/categories/R767?pdf=1&language=en&country=US), US 2015275505 A1 (see also https://www.isatsb.com/push-rod-hanger.php), WO2021032527 A1, WO2021032517 A1 and WO2021032536 A1 disclose various quick lock mechanisms for threaded rods.

It is an object of the invention to provide rod connectors that provide particularly good performance at particularly low effort, in particular in connection with being intended for used with different diameter rods.

This object is achieved by a device according to claim 1. Dependent claims refer to preferred embodiments of the invention.

According to the invention, the rod connector further comprises a pin, which projects from the closure into the cavity, wherein the pin is hollow so as to define a receptacle for receiving a smaller diameter rod, and wherein the pin comprises a collar which provides an abutment for a larger diameter rod.

Accordingly, particularly good lateral guidance for different diameter rods can be achieved, which can provide particularly good performance at particularly low effort.

The collar defines a mouth of the receptacle of the pin. The closure is preferably a plug. The respective rods can in particular be threaded rods. The front end and the rear end, respectively, are opposite ends of the housing.

The pin and the closure are, preferentially, integral parts, i.e. formed as a unit. This can be advantageous in view of ease of assembly and/or durability. However, the pin and the closure could also be separate parts. Preferentially, the pin and/or the closure can be a metal part each, in particular a steel part.

Advantageously, the collar is a closed ring, more preferentially a circular ring. This can provide a particularly large contact area with the rod, which can in term be advantageous in view of performance and manufacturing. However, other collar forms could also be envisaged, such as crown shapes. In any case, the collar is preferentially circular.

The rod connector can, advantageously, comprise a coil spring for biasing the at least one rod engagement body against the tapered surface. This can reduce slack and/or further increase reliability of the rod locking mechanism. At its rear end, the coil spring may rest on the plug. The coil spring might be a single part but might also consist of a plurality of separate components.

According to another preferred embodiment of the invention, an annular gap is formed between the pin and the housing. Accordingly, there is a radial spacing between the radially outside surface of the pin and the radially inside surface of the housing. The annular gap can be of use for guiding other elements, thereby improving functionality and versatility.

Preferably, the coil spring is arranged, at least partly, more preferably completely, within the annular gap. Accordingly, at least a section of the coil spring is located within the annual gap. This can allow for a particular long overall length of the coil spring and/or particular good guidance, which can further improve functionality.

In an alternative embodiment, the pin can comprise an extension sleeve, which projects from the collar towards the front end of the housing, wherein the coil spring (in particular at the rear end of the coil spring) abuts against the extension sleeve (in particular against a forward face of the extension sleeve). This can provide for a particularly robust setup and/or particularly short spring lengths. The forward face of the extension sleeve can be preferably ring shaped, more preferably closed ring shaped, but can also have other shapes, such as crown shapes.

The pin, including or excluding the extension sleeve, might be externally threaded for a threaded connection to the housing. The closure might e.g. be threadedly connected to the housing, connected by caulking, welding, or by other connection methods.

The coil spring and the rod engagement body could be integral parts, i.e. formed as a unit. Accordingly, the rod engagement body can be a section of the coil spring, in particular a front section of the coil spring. This can provide a particularly easy to manufacture embodiment.

In an alternative embodiment, the rod connector can comprise an insert that comprises a ring and a plurality (e.g. three, four or five) of engagement fingers projecting from the ring, wherein each of the engagement fingers provides a rod engagement body. This can provide a particular robust embodiment. The coil spring may abut against the ring, in particular at the front end of the coil spring. The ring and the fingers of the insert may allow passage of a rod so as to reach to the pin or into the pin. In particular, the insert can consist of a metal material. The insert may be designed as described in WO2021032527 A1, WO2021032517 A1 or/and WO2021032536 A1.

Preferably, the pin extends into the ring, so as to guide the insert on the ring. Accordingly, the pin provides an axial guide for the ring and thus for the insert. This can provide particularly reliable operation at low effort.

The rod connector is preferably a cast in place anchor, i.e. an anchor intended to be cast into concrete. Preferably, the rod connector comprises an anchor flange, which projects from the housing. This can provide particularly robust anchorage at particularly low effort.

Alternatively, the rod connector could be a screw, preferably a concrete screw. Preferably, the rod connector comprises a threaded shank, which projects from the closure. This can provide particularly robust screw connection at particularly low effort.

The invention also relates to a system comprising a rod connector as described here and a rod that is arranged within the cavity of the housing of the rod connector. Accordingly, the rod connector is used to engage a rod as intended.

The invention is explained in greater detail below with reference to preferred exemplary embodiments, which are depicted schematically in the accompanying drawings. Individual features of the exemplary embodiments presented below can be implemented either individually or in any combination within the scope of the present invention.
Figure 1 is sectional view of a first embodiment of a rod connector.
Figure 2 is an exploded view of the rod connector of figure 1.
Figure 3 is sectional view of a second embodiment of a rod connector.
Figure 4 is a perspective view of the rod connector of figure 3.

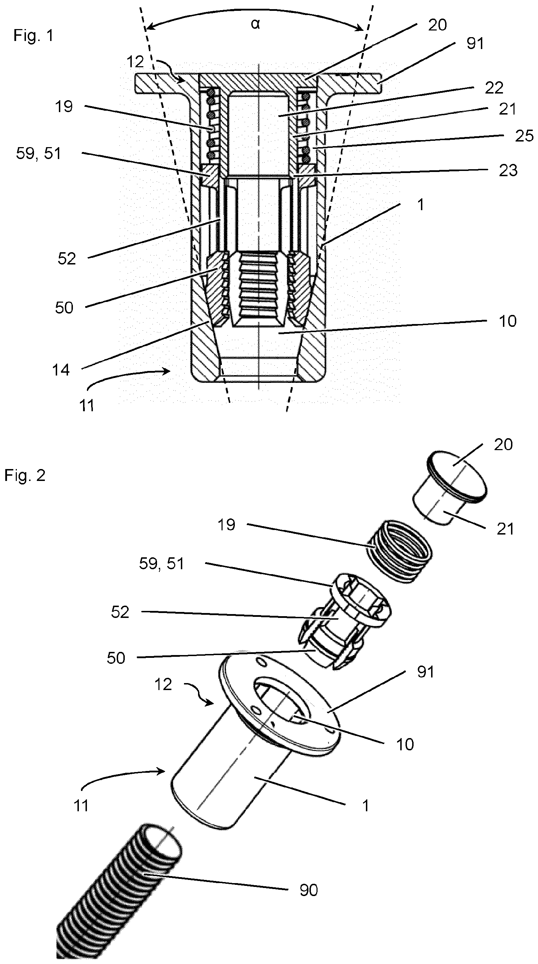

The rod connector shown in figures 1 to 2 comprises a housing 1, in particular a metal housing 1. In the present embodiment, the housing 1 has a generally circular cylindrical outline, but this is an example only, and other outline shapes could be used, such as conical shapes. The housing 1 has a cavity 10 for receiving a rod 90 therein, wherein the cavity 10 forms a through hole in the housing 1, which extends from a front end 11 of the housing to a rear end 12 of the housing 1. The front end 11 and the rear end 12, respectively, are opposite ends of the housing 1. The cavity 10 opens to the front end 11, i.e. at the front end 11, the cavity 10 is accessible from outside of the housing 1. Accordingly, a mouth for inserting a rod 90, in particular a threaded rod, into the cavity 10 is formed at the front end 11.

By way of example, the rod connector provides a cast in place anchor. As such, it comprises an anchor flange 91, which radially projects from the housing 1, in particular near its rear end 12. The anchor flange 91 and the housing 1 can be integral parts or separate parts.

At the rear end 12 of the housing 1, which is located opposite its first end 11, the cavity 10 is closed by means of a closure 20. The closure 20 and the housing 1 are separate parts. The closure 20 and the housing could e.g. be connected by caulking or gluing,

An insert 59, in particular a metal insert 59, is arranged within the cavity 10 of the housing 1. The insert 59 comprises a rearward ring 51 and a plurality (four in the present embodiment, by way of example) of engagement fingers 52. Each of the engagement fingers 52 projects forwardly from the ring 51. Each of the engagement fingers 52 forms, at its respective forward end, a rod engagement body 50 for clamping a rod 90 inserted into the housing 1. The rod engagement bodies 50 might have inwardly facing threaded and/or roughened surfaces for engaging the rod 90.

The housing 1 has a tapered surface 14, which is an inner surface that surrounds the cavity 10. The tapered surface 14 tapers towards the front end 11 of the housing 1. In the present embodiment, the tapered surface 14 is by way of example conical, with an opening angle α of 12° or more (about 24° in the present embodiment), but other tapered forms could also be envisaged. For example, ridges might be provided, that divide the tapered surface 14 into segments. The tapered surface 14 provides a wedge for wedging the rod engagement bodies 50 radially inwardly, towards a rod 90 arranged between rod engagement bodies 50, so as to lock the rod 90 within the rod engagement bodies 50 as the rod 90 is pulled out of the housing 1 via the front end 11.

The rod connector further comprises a coil spring 19, which is arranged within the cavity 10, and which pushes the rod engagement bodies 50 against the tapered surface 14 and biases them towards the front end 11. On its front end, the coil spring 19 bears directly against the ring 51 and thus indirectly against the rod engagement bodies 50 integrally connected to the ring 51. On its rear end, the coil spring 19 bears directly against the closure 20.

When the rod connector is used as intended, a rod 90 is inserted via the front end 11 into the cavity 10 of the housing 1. During this operation, the rod engagement bodies 50 are pushed upwardly away from the front end 11, towards the rear end 12 of the housing 1, thereby biasing the coil spring 19, and the rod engagement bodies 50 enter a wide region of the tapered surface 14 that allows the rod engagement bodies 50 to be radially displaced such that the rod 90 can pass.

The rod 90 is subsequently released, and the coil spring 19 thus pushes the rod engagement bodies 50 axially towards the front end 11. This in term causes the tapered surface 14 to wedge the rod engagement bodies 50 against the rod 90, thereby engaging the rod 90. The resulting configuration is shown in figure 2. If the rod 90 is subsequently loaded in the pull-out direction out of the cavity 10, wedging action between the tapered surface 14 and the rod engagement bodies 50 will wedge-lock the rod 90.

The rod connector further comprises a pin 21, which projects from the closure 20 into the cavity 10. By way of example, the closure 20 and the pin 21 are shown to be integral parts, but they could also be separate parts. Preferably, however, they are fixedly connected to one another. In particular, the closure 20 and/or the pin 21 are metal parts. The pin 21 projects from the closure 20 towards the front end 11 of the housing 1.

The pin 21 is hollow and thus defines, in its inside, a receptacle 22. The receptacle 22 is open towards the front end 11 and can receive a small diameter rod 90 inserted into the cavity 10.

In particular, the receptacle 22 is cylindrical, in particular circular cylindrical. The receptacle 22 is a blind hole and is closed at its rear end by closure 20.

At the front end of the pin 21, which faces the front end 11 of the housing 1, a collar 23 is provided. This collar 23 is the forward face of the pin 21 and/or it surrounds an entrance to the receptacle 22. The collar 23, which is arranged within the cavity 10 of the housing 1, provides an abutment for a larger diameter rod 90. In the present embodiment, the collar 23 is by way of example a circular ring, but other forms, such as crown shapes or broken rings, could be also envisaged.

The outside of the pin 21 has some radial distance to the inside of the housing 1, so as to define an annular gap 25 between the pin 21 and the housing 1, wherein the annular gap 25 surrounds the pin 21. The coil spring 19 is arranged within the annular gap 25, so that the pin 21 provides a guide for the coil spring 19. The ring 51 of the insert 59 is also, at least partly, arranged within the annular gap 25, and the pin 21 is plugged, at least partly, into the ring 51, so that the pin 21 provides an axial guide for the ring and thus for the insert 59.

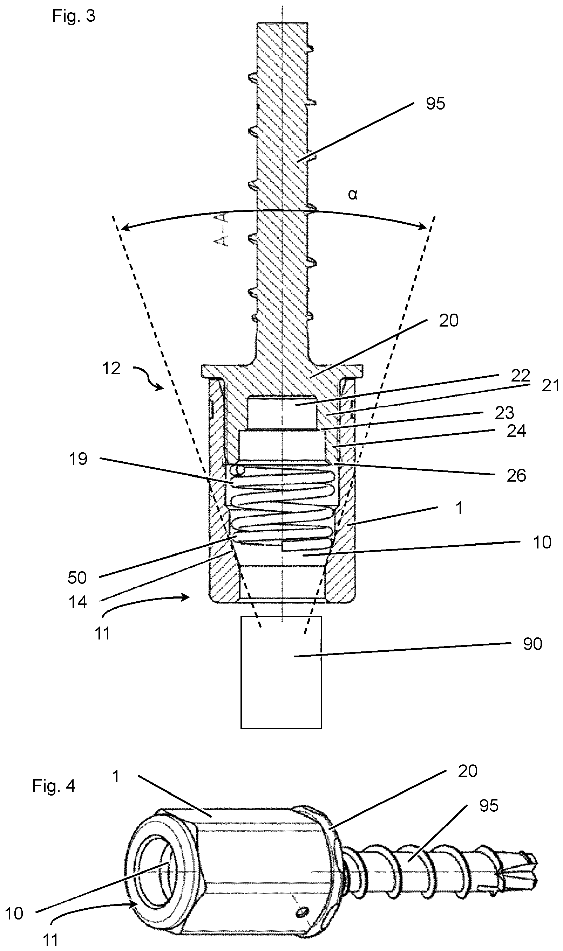

Figures 3 to 4 show a second embodiment of a rod connector. Same reference numerals as above are used for alike or analogous elements.

In contrast to the rod connector of figures 1 and 2, which is by way of example a cast in place anchor, the rod connector of figures 3 and 4 is a screw, in particular a concrete screw.

The rod connector of figures 3 and 4 comprises a housing 1, in particular a metal housing 1. In the present embodiment, the housing 1 has a generally polygonal cylindrical outline, so as to provide a screw drive, but this is an example only, and other outline shapes could be used. The housing 1 has a cavity 10 for receiving a rod 90 therein, wherein the cavity 10 forms a through hole in the housing 1, which extends from a front end 11 of the housing to a rear end 12 of the housing 1. The front end 11 and the rear end 12, respectively, are opposite ends of the housing 1. The cavity 10 opens to the front end 11, i.e. at the front end 11, the cavity 10 is accessible from outside of the housing 1. Accordingly, a mouth for inserting a rod 90, in particular a threaded rod, into the cavity 10 is formed at the front end 11.

At the rear end 12 of the housing 1, which is located opposite its first end 11, the cavity 10 is closed by means of a closure 20. The closure 20 and the housing 1 are separate parts.

By way of example, the rod connector is a screw. As such, it comprises a threaded shank 95, which projects axially from the closure 20. The threaded shank 95 and the closure 20 can be preferably integral parts, but also separate parts.

The housing 1 has a tapered surface 14, which is an inner surface that surrounds the cavity 10. The tapered surface 14 tapers towards the front end 11 of the housing 1. In the present embodiment, the tapered surface 14 is by way of example conical, with an opening angle α of 12° or more (about 60° in the present embodiment), but other tapered forms could also be envisaged.

The rod connector further comprises a coil spring 19, which is arranged within the cavity 10. On its rear end 12, the coil spring 19 bears (indirectly, as described in more detail below) against the closure 20. On its front end, the coil spring 19 forms a helical rod engagement body 50 for clamping a rod 90 inserted into the housing 1. In particular, the front end of the coil spring 19 might bear against the tapered surface 14. The tapered surface 14 provides a wedge for wedging the front end of the coil spring 19, i.e. the rod engagement body 50, radially inwardly, towards a rod 90 arranged inside the coil spring 19, so as to lock the rod 90 within coil spring 19, as the rod 90 is pulled out of the housing 1 via the front end 11 of the housing 1.

When the rod connector is used as intended, a rod 90 is inserted via the front end 11 into the cavity 10 of the housing 1. During this operation, the front end of the coil spring 19 is pushed upwardly away from the front end 11 of the housing 1, towards the rear end 12 of the housing 1, thereby biasing the coil spring 19, and the front end of the coil spring 19 enters a wide region of the tapered surface 14 that allows the front end of the coil spring 19 to be radially widened such that the rod 90 can pass.

The rod 90 is subsequently released, and the coil spring 19 pushes its front end axially towards the front end 11 of the housing 1. This in term causes the tapered surface 14 to wedge the front end of the coil spring 19 (which provides the rod engagement body 50) against the rod 90, thereby engaging the rod 90. If the rod 90 is subsequently loaded in the pull-out direction out of the cavity 10, wedging action between the tapered surface 14 and the rod engagement body 50 will wedge-lock the rod 90.

The rod connector further comprises a pin 21, which projects from the closure 20 into the cavity 10. The pin 21 and the threaded shank 95, respectively, project from different sides of the closure 20. By way of example, the closure 20 and the pin 21 are shown to be integral parts, but they could also be separate parts. Preferably, however, they are fixedly connected to one another. In particular, the closure 20 and/or the pin 21 are metal parts. The pin 21 projects from the closure 20 towards the front end 11 of the housing 1.

The pin 21 has an external thread, which is screwingly connected with an internal thread of the housing 1. By means of this screw connection, the closure 20 (and the threaded shank 95) are connected to the housing 1.

The pin 21 is hollow and thus defines, in its inside, a receptacle 22. The receptacle 22 is open towards the front end 11 and can receive a small diameter rod 90 (e.g. a ½ inch rod) inserted into the cavity 10. In particular, the receptacle 22 is cylindrical, in particular circular cylindrical.

The pin 21 has a collar 23, which faces the front end 11 of the housing 1 and/or it surrounds an entrance to the receptacle 22. The collar 23, which is arranged within the cavity 10 of the housing 1, provides an abutment for a larger diameter rod 90 (e.g. a ¾ inch rod). In the present embodiment, the collar 23 is by way of example a circular ring, but other forms, such as crown shapes or broken rings, could be also envisaged.

The pin 21 furthermore has an extension sleeve 24, which extends within the cavity 10 of the housing 1, and which projects from the collar 23 towards the front end 11 of the housing 1. The extension sleeve 24 provides a rearward abutment for the coil spring 19, in particular at a forward face 26 of the extension sleeve 24. The external thread of the pin 21 extends into the extension sleeve 24, by way of example.

## Claims

1. Rod connector comprising
- a housing (1) having a cavity (10) for receiving a rod (90) therein, wherein the cavity (10) extends through the housing (1), from an open front end (11) of the housing to a rear end (12) of the housing (1),
- at least one rod engagement body (50), which is arranged within the cavity (10),
- wherein the housing (1) has a tapered surface (14), which delimits the cavity (10), and which tapers towards the front end (11) of the housing (1), for wedging the at least one rod engagement body (50) against the rod (90) when the rod (90) is arranged within the cavity (10), and
- a closure (20), which closes the cavity (10) at the rear end (12) of the housing (1),
**characterized in that**
- the rod connector further comprises a pin (21), which projects from the closure (20) into the cavity (10), wherein the pin (21) is hollow so as to define a receptacle (22) for receiving a smaller diameter rod (90), and wherein the pin (21) comprises a collar (23) which provides an abutment for a larger diameter rod (90).

2. Rod connector according to claim 1,
**characterized in that**
the pin (21) and the closure (20) are integral parts.

3. Rod connector according to any of the preceding claims,
**characterized in that**
the collar (23) is a closed ring.

4. Rod connector according to any of the preceding claims,
further comprising
a coil spring (19) for biasing the at least one rod engagement body (50) against the tapered surface (14).

5. Rod connector according to any of the preceding claims,
**characterized in that**
an annular gap (25) is formed between the pin (21) and the housing (1).

6. Rod connector according to claims 4 and 5,
**characterized in that**
the coil spring (19) is arranged, at least partly, within the annular gap (25).

7. Rod connector according to claim 4,
**characterized in that**
the pin (21) comprises an extension sleeve (24), which projects from the collar (23) towards the front end (11) of the housing (1), wherein the coil spring (19) abuts against the extension sleeve (24).

8. Rod connector according to any of claims 4, 6 or 7, or according to claims 5 and 4,
**characterized in that**
the coil spring (19) and the rod engagement body (50) are integral parts.

9. Rod connector according to any of claims 1 to 7,
further comprising
an insert (59) that comprises a ring (51) and a plurality of engagement fingers (52) projecting from the ring (51), wherein each of the engagement fingers (52) provides a rod engagement body (50).

10. Rod connector according to claim 9,
**characterized in that**
the pin (21) extends into the ring (51).

11. Rod connector according to any of the preceding claims,
further comprising an anchor flange (91), which projects from the housing (1), or a threaded shank (95), which projects from the closure (20).

12. System comprising a rod connector according to any of the preceding claims and a rod (90) that is arranged within the cavity (10) of the housing (1) of the rod connector.
